Europäisches Patentamt

European Patent Office

Office européen des brevets

(11) Numéro de publication : **0 091 105 B1**

# (12) FASCICULE DE BREVET EUROPÉEN

(45) Date de publication du fascicule du brevet :
29.07.87

(21) Numéro de dépôt : 83103238.8

(22) Date de dépôt : 31.03.83

(51) Int. Cl.⁴ : **F 04 D 13/10, H 02 K 5/22**

(54) Groupe motopompe utilisable en immersion.

(30) Priorité : 05.04.82 FR 8205852

(43) Date de publication de la demande :
12.10.83 Bulletin 83/41

(45) Mention de la délivrance du brevet :
29.07.87 Bulletin 87/31

(84) Etats contractants désignés :
**AT DE FR GB IT SE**

(56) Documents cités :
**GB-A- 886 296**
**US-A- 3 952 218**
**US-A- 4 128 735**

(73) Titulaire : **ALSTHOM**
**38, avenue Kléber**
**F-75784 Paris Cédex 16 (FR)**

(72) Inventeur : **Romand-Monnier, Jacques**
**11, rue Louis Rousseau**
**F-39000 Lons Le Saunier (FR)**
Inventeur : **Lejeune, Jean-Pierre**
**26, rue des Frères Berger**
**F-90500 Beaucourt (FR)**

(74) Mandataire : **Weinmiller, Jürgen et al**
**Lennéstrasse 9 Postfach 24**
**D-8133 Feldafing (DE)**

## Description

La présente invention concerne un groupe motopompe utilisable en immersion.

Plus particulièrement, mais non limitativement, l'invention s'applique à un groupe motopompe immergé en grande profondeur et travaillant à température élevée comme c'est le cas par exemple pour le pompage dans un puits de pétrole.

Un tel groupe comprend une partie motrice, composée généralement de plusieurs moteurs, surmontée des éléments de pompe, un système d'étanchéité dynamique étant placé entre la partie motrice et les pompes entraînées par les moteurs. En effet, les moteurs sont remplis d'un fluide protecteur alors que les pompes sont traversées par le fluide à pomper.

Dans les groupes connus tels que ci-dessus, comme décrit par exemple dans le brevet américain DETERS US-A-3 952 218, l'alimentation électrique des moteurs, qui sont généralement des moteurs asynchrones à cage, est effectuée par un simple connecteur comportant une fiche femelle s'implantant directement dans le moteur muni d'une fiche mâle. Ce connecteur est toujours placé à la partie supérieure de la partie motrice : entre celle-ci et le système d'étanchéité, donc dans un endroit traversé par l'arbre moteur pour entraîner les pompes. Il s'ensuit que le connecteur doit être tel qu'il puisse se monter dans l'espace libre entre l'enveloppe de la carcasse et le passage de l'arbre, donc dans peu de place.

La présente invention a pour but de pallier cet inconvénient et a donc pour objet un groupe motopompe utilisable en immersion comprenant au moins un moteur électrique surmonté par au moins un moteur électrique surmonté par au moins une pompe, entraînée en rotation par l'arbre du moteur, caractérisé en ce que l'alimentation électrique du moteur est réalisée au moyen d'un module de connexion électrique indépendant fixé à l'extrémité inférieure du moteur, hors de l'encombrement de l'arbre, ledit module comportant une fiche de connexion reliée à un câble remontant le long du groupe et y fixé, ladite fiche de connexion coopérant avec une embase de connexion liée au module et munie de moyens de liaison électrique avec ladite fiche de connexion, ladite embase de connexion étant reliée par des conducteurs à des broches de connexion interne enfichées dans une douille correspondante du moteur.

La disposition selon l'invention permet ainsi une meilleure isolation des pièces électriques entre elles et par rapport à la masse étant donné qu'on n'est plus gêné par l'arbre. L'ensemble étant plus gros, est moins fragile et permet un meilleur arrimage du câble sur le connecteur. Les dimensions plus grandes permettent également une étanchéité plus sûre.

L'invention sera bien comprise à la lumière de la description d'un exemple de réalisation, faite ci-après en regard du dessin annexé dans lequel :

La figure 1 montre une vue générale d'un groupe moto-pompe selon l'invention.

La figure 2 montre un exemple particulier d'un module de connexion électrique.

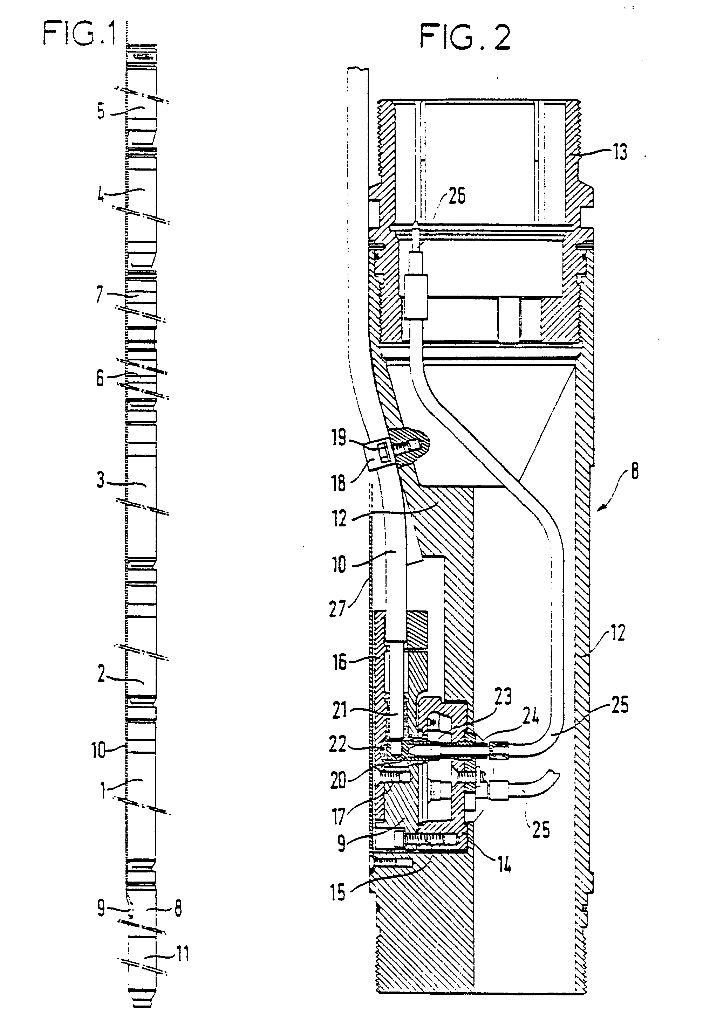

En se référant à la figure 1, l'ensemble moto-pompe représenté comporte trois moteurs électriques asynchrones à cages 1, 2 et 3 assemblés les uns à la suite des autres et surmontés de deux éléments de pompe 4 et 5. Entre la partie moteur et la partie pompe sont situés un module d'étanchéité 6, réalisant l'étanchéité entre l'intérieur des moteurs et le milieu extérieur en communication avec l'intérieur des pompes, et un module séparateur de gaz 7.

Selon l'invention, l'alimentation électrique des moteurs est réalisée au moyen d'un module de connexion 8 situé à l'extrémité inférieure des moteurs au-delà de l'extrémité de l'arbre. Ce module connecteur comporte une fiche de connexion 9 reliée à un câble d'alimentation 10 qui remonte le long de l'ensemble en y étant fixé.

Le groupe motopompe est complété par un module terminal 11 qui est destiné à assurer une réserve d'huile sous pression aux moteurs. Il comprend un reservoir expansible, en communication avec les moteurs et avec le module de connexion 8, et il est soumis à la compression de ressorts.

La figure 2 donne un exemple d'un module de connexion 8. Il comprend un support de connecteur 12 à l'extrémité supérieure duquel est vissé un bloc de liaison 13 avec le moteur 1. A son extrémité inférieure vient se visser le module 11. Sur le support 12 est fixée une embase de connexion 14 au moyen de vis non représentées.

La fiche de connexion 9 reliée au câble d'alimentation 10 est fixée sur l'embase de connexion 14 au moyen de trois vis 15. La fiche de connexion 9 est protégée par un couvercle 16 fixé par des vis 17. Un serre câble 18 fixe le câble 10 contre le support de connecteur 12 par des vis 19.

La fiche de connexion 9 porte trois douilles 20 reliées aux trois conducteurs 21 du cable 10. Une seule douille 20 et un seul conducteur 21 sont visibles sur la figure. Les douilles 20 sont montées dans un isolant 22.

L'embase de connexion 14 reçoit trois broches mâles 23, montées dans des isolants 24 et reliées chacune à un conducteur 25 aboutissant à une broche de connexion interne 26 destinée à s'enficher dans une douille correspondante du moteur 1. La liaison entre le module de connexion 8 et le moteur 1 est realisée par un manchon qui vient se visser sur le bloc de liaison 13.

Un capot de protection 27, de forme générale cylindrique recouvre la fiche de connexion 9 dans son logement et la protège contre les chocs. Ce capot se raccorde sur un profilé en forme de U retourné, non représenté, qui recouvre le câble 10.

## Revendication

Groupe motopompe utilisable en immersion comprenant au moins un moteur électrique (1, 2, 3) surmonté par au moins une pompe (4, 5), entraînée en rotation par l'arbre du moteur, caractérisé en ce que l'alimentation électrique du moteur est réalisée au moyen d'un module de connexion électrique indépendant (8) fixé à l'extrémité inférieure du moteur (1), hors de l'encombrement de l'arbre, ledit module comportant une fiche de connexion (9) reliée à un câble (10) remontant le long du groupe et y fixé, ladite fiche de connexion coopérant avec une embase de connexion (14) liée au module et munie de moyens (23) de liaison électrique avec ladite fiche de connexion, ladite embase de connexion étant reliée par des conducteurs (25) à des broches de connexion interne (26) enfichées dans une douille correspondante du moteur (1).

## Claim

A motor-driven pump assembly which can be used under water, comprising at least one electric motor (1, 2, 3) surmounted by at least one pump (4, 5), driven into rotation by the shaft of the motor, characterized in that the electric supply of the motor is realised by means of an independent electric connection module (8) fixed to the lower end of the motor (1), beyond the space taken up by the shaft, said module comprising a connection pin (9) connected to a cable (10) running along the group and being fixed to it, said connection pin co-operating with a connection socket (14) connected to the module and supplied with electric connection means (23) for connection with said connection pin, said connection socket being connected via conductors (25) to pins for internal connection (26) inserted into a corresponding sleeve of the motor (1).

## Patentanspruch

Im Tauchbetrieb verwendbares Motorpumpenaggregat mit mindestens einem Elektromotor (1, 2, 3), über dem sich mindestens eine Pumpe (4, 5) befindet, die über die Welle des Motors angetrieben wird, dadurch gekennzeichnet, daß die elektrische Versorgung des Motors mittels eines unabhängigen elektrischen Verbindungsmoduls (8) erfolgt, der am unteren Ende des Motors (1) außerhalb des Wellenbereichs angeordnet ist, wobei der Modul einen Verbindungsstecker (9) aufweist, der mit einem Kabel (10) verbunden ist, das entlang dem Aggregat verläuft und an ihm befestigt ist, wobei der Verbindungsstecker mit einem Verbindungssockel (14) zusammenwirkt, der mit dem Modul verbunden und mit Mitteln (23) zur elektrischen Verbindung mit dem Stecker versehen ist, wobei der Verbindungssockel über Leiter (25) an Klemmen zur inneren Verbindung (26) verbunden ist, die in eine entsprechende Buchse des Motors (1) eingesteckt sind.

FIG.1

FIG.2